# EUROPÄISCHE PATENTSCHRIFT

(11) **EP 2 559 565 B1**
(45) Veröffentlichungstag und Bekanntmachung des Hinweises auf die Patenterteilung: **04.11.2015**
(21) Anmeldenummer: 12175524.3
(22) Anmeldetag: 09.07.2012
(51) Int. Cl.: B60B 21/06, B60B 1/04

(54) **Speichenrad für schlauchlose Reifen**
Spoked wheel for tubeless tyres
Roue à rayons de pneus sans chambre à air

(30) Priorität: 17.08.2011 DE 102011081069
(43) Veröffentlichungstag der Anmeldung: 20.02.2013
(73) Patentinhaber: Bayerische Motoren Werke Aktiengesellschaft, 80809 München (DE)
(72) Erfinder: Chandra, Adrian Resa, 80798 München (DE); Mohr, Matthias, 85609 Aschheim (DE)

(56) Entgegenhaltungen:
- WO-A1-2011/088932
- DE-A1- 4 444 044
- DE-U1-202006 009 707
- DE-U1-202012 100 063
- FR-A1- 2 526 374
- US-A- 1 474 405

## Beschreibung

Die vorliegende Erfindung betrifft ein Speichenrad für schlauchlose Reifen gemäß dem Oberbegriff des Patentanspruches 1.

Ein derartiges Speichenrad ist aus der gattungsgemäßen DE 20 2006 009 707 U1 bekannt.

Zum technischen Hintergrund der vorliegenden Erfindung zählen ferner die US 1 474 405 A, WO 2011/088932 A1, DE 44 44 044 A1, WO 2009081242 A1 sowie die FR 25 26 374 A1.

Speichenräder für Motorräder gibt es grundsätzlich in zwei verschiedenen Ausführungen, nämlich mit Schlauch oder schlauchlos. Nachteilig an "Schlauchrädern" ist das durch den Schlauch bedingte zusätzliche Gewicht sowie die Tatsache, dass bei einem Platzen des Schlauchs ein sehr plötzlicher Luftverlust auftreten kann.

Bei schlauchlosen Speichenrädern unterscheidet man sogenannte "geschlossene Speichenräder" und "offene Speichenräder". Bei offenen Speichenrädern durchsetzten die äußeren Speichenenden die Felge, was eine Abdichtung der in der Felge vorgesehenen "Speichenlöcher" erforderlich macht. Bei geschlossenen Speichenrädern sind die Speichen so an der Felgeninnenseite befestigt, dass im Bereich der Speichenenden keinerlei Verbindung zwischen der Felgeninnen- und der Felgenaußenseite, welche zusammen mit dem Reifen das Luftvolumen begrenzt, besteht.

Die eingangs erwähnte WO 2009081242 beschreibt ein schlauchloses, geschlossenes Speichenrad. Bei diesem Speichenrad sind an der Felgeninnenseite "Speichenhalter" in Umfangsrichtung voneinander beabstandet angeordnet. Jeder Speichenhalter ist durch zwei in Querrichtung des Speichenrades voneinander beabstandete Halteaugen gebildet, die jeweils mit einem Loch versehen sind. In die beiden Halteaugen ist von der Seite her ein zylindrischer Haltebolzen eingeschoben. Jeder der Haltebolzen wiederum weist eine Gewindebohrung auf, in die ein äußeres, mit einem Außengewinde versehenes Ende einer Speiche eingeschraubt wird. Das Einschrauben des Speichenendes erfolgt nach dem Einschieben des Haltebolzens in die in den Halteaugen vorgesehenen Ausnehmungen. Die inneren Speichenenden sind mit einem Kopf versehen. Bei der fertigen Montage werden nacheinander die einzelnen Speichen durch in der Nabe vorgesehene Löcher geschoben und nach dem Einsetzen der Haltebolzen in die Haltebolzen eingeschraubt. Zum Festziehen der Speichen ist an den inneren Speichenenden jeweils ein Innenmehrkant vorgesehen. Beim Festziehen kann es aufgrund der Länge der Speichen zu einer beträchtlichen Torsion der Speichen kommen. Da die Speichenhalter in der Nähe angeordnet sind, weist das Speichenrad eine vergleichsweise geringe Biegesteifigkeit auf.

Aufgabe der Erfindung ist es, ein Speichenrad für schlauchlose Reifen zu schaffen, das eine hohe Biege- bzw. Torsionssteifigkeit aufweist, das einfach montierbar ist und das so konzipiert ist, dass beim Montieren der Speichen an den Speichen möglichst keine Zwangskräfte oder Biegemomente auftreten können.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Speichenrad für schlauchlose Reifen mit einer Nabe, die über mehrere Speichen mit einer Felge verbunden ist. Hierzu sind an einer Innenseite der Felge in Umfangsrichtung verteilt nach innen abstehende "Speichenhalter" vorgesehen, die jeweils eine "Ausnehmung" aufweisen. Die Speichen lassen sich begrifflich gliedern in "erste Speichen" und "zweite Speichen". Innere Enden der ersten Speichen sind in einem Bereich links einer Radmittelebene mit der Nabe verbunden. Innere Enden der zweiten Speichen sind in einem Bereich rechts neben der Radmittelebene mit der Nabe verbunden.

Der Kern der Erfindung besteht darin, dass die in den Speichenhaltern vorgesehenen "Ausnehmungen" "geschlitzt" sind. "Geschlitzt" bedeutet in diesem Zusammenhang, dass die Speichenhalter einen nach innen, d. h. zur Nabe hin, und zu mindestens einer Seite des Speichenhalters hin offenen Schlitz aufweisen. "Zur Seite hin offen" bedeutet in diesem Zusammenhang, dass der Schlitz in mindestens einer Richtung, die im Wesentlichen senkrecht zur Radmittelebene ist, offen ist.

Ein derartiger nach innen zur Nabe und zu mindestens einer Seite hin offener Schlitz ermöglicht eine sehr einfache Speichenmontage. Bei der Speichenmontage kann nämlich ein Endabschnitt einer Speiche von der offenen Seite des Schlitzes her einfach in die Ausnehmung eingeführt werden.

Um das äußere Ende der Speiche an dem Speichenhalter zu halten kann am äußeren Speichenende eine Verdickung vorgesehen sein, die nach dem seitlichen Einführen des Endabschnitts der Speiche in den Schlitz in der Ausnehmung des Speichenhalters, d. h. unmittelbar am Speichenhalter, eingehängt wird.

Alternativ dazu kann ein "bolzenartiges Zwischenelement" vorgesehen sein, das eine Ausnehmung zur Aufnahme eines äußeren Endabschnitts einer Speiche bzw. der dort vorgesehenen Verdickung aufweist und das zusammen mit der daran "eingehängten" Speiche in die Ausnehmung des Speichenhalters eingeführt wird. Bei einem Speichenrad, bei dem die äußeren Speichenenden über Zwischenelemente mit den Speichenhaltern verbunden sind, wird also bei der Speichenmontage zunächst die Speiche mit ihrem inneren Speichenende durch die in dem Zwischenelement vorgesehene Ausnehmung gesteckt. Das Zwischenelement wird also auf die Speiche "aufgefädelt". Anschließend wird das Zwischenelement mit der durch die Ausnehmung hindurch gesteckten Speiche von der Seite her in die Ausnehmung des Speichenhalters eingeführt bzw. geschoben, was problemlos möglich ist, da, wie bereits erläutert, jeder der Speichenhalter mit einem nach innen zur Nabe und zu einer Seite des Speichenhalters hin offenen Schlitz versehen ist.

Bei einem Speichenrad gemäß der Erfindung sind die äußeren Enden der Speichen somit ausschließlich "formschlüssig" mit der Felge bzw. der den an der Felgeninnenseite vorgesehenen Speichenhaltern verbunden. "Formschlüssig" bedeutet in diesem Zusammenhang in Abgrenzung zu der eingangs genannten WO 2009081242 "gewindelos".

Nach einer Weiterbildung der Erfindung sind die Speichen über ihre gesamte Länge gerade. Sie weisen also keine Kröpfung, Biegung o. ä. auf. Gerade Speichen sind kostengünstiger als gekröpfte oder gebogene Speichen und weisen einen optimalen Kraftfluss (ohne nennenswerte Biegemomente) auf, was das Risiko von Speichenbrüchen verringert. Eine Voraussetzung für die Verwendung gerader Speichen ist der in den Speichenhaltern vorgesehene und entsprechend angeordnete Schlitz.

Nach einer Weiterbildung der Erfindung sind die Speichen "gekreuzt" angeordnet, was dem Speichenrad eine hohe Biege- bzw. Torsionssteifigkeit verleiht. "Gekreuzt" bedeutet in diesem Zusammenhang, dass die äußeren Enden der ersten Speichen (deren innere Enden in einem Bereich links der Radmittelebene mit der Nabe verbunden sind), von Speichenhaltern gehalten werden, die sich in einem Bereich rechts der Radmittelebene befinden. Analog werden die äußeren Enden der zweiten Speichen (deren innere Enden in einem Bereich rechts der Radmittelebene mit der Nabe verbunden sind) von Speichenhaltern gehalten, die in einem Bereich links der Radmittelebene in der Innenseite der Felge angeordnet sind.

Die Speichenhalter können paarweise (links und rechts) entlang des Innenumfangs der Felge angeordnet sein. "Paarweise" bedeutet in diesem Zusammenhang, dass an einer Umfangsposition der Felge, an der sich Speichenhalter befinden, rechts neben der Radmittelebene ein einer ersten Speiche zugeordneter Speichenhalter angeordnet ist und dass an der selben Umfangsposition, jedoch links der Radmittelebene, ein einer zweiten Speiche zugeordneter Speichenhalter angeordnet ist.

Die inneren Enden der Speichen können über Speichennippel mit der Nabe verbunden sein. Die Speichennippel können in zugeordnete Durchgangslöcher, die in der Nabe vorgesehen sind, formschlüssig eingesetzt sein. Die Speichennippel weisen jeweils ein Innengewinde auf, in das ein mit einem Außengewinde versehenes Ende einer Speiche eingeschraubt ist. Aufgrund der gekreuzten Anordnung der Speichen und der dadurch bedingten Schrägstellung der Speichen kreuzen "gedachte Verlängerungen" der Speichen die Nabe "sekantenartig" (in Abgrenzung zu machen Speichenrädern des Standes der Technik, bei denen die Speichen nahezu tangential bezüglich der Nabe angeordnet sind). Bei dem erfindungsgemäßen Konzept können die Speichennippel so angeordnet werden, dass sie von schräg seitlich der Nabe aus zugänglich, d.h. anziehbar sind.

Zum Anziehen der Speichennippel können diese mit einem Innenmehrkant oder auch, sofern sie hinreichend weit aus den in der Nabe vorgesehenen Durchgangsnippellöchern herausstehen, mit einem Außenmehrkant oder einer anderen "Profilierung" versehen sein. Bei diesem Konzept werden die Speichen beim Anziehen der Speichennippel im Unterschied zu der eingangs erwähnten WO 2009081242 A1 kaum bzw. nur unwesentlich tordiert.

Nach einer Weiterbildung der Erfindung werden die Zwischenelemente (Haltebolzen) durch die die Speichen hindurch gesteckt sind, entlang ihrer gesamten Länge von den Speichenhaltern gehalten. Dies ist ebenfalls ein weiterer Unterschied gegenüber der eingangs erwähnten WO 2009081242, da bei dem dort beschriebenen Speichenrad lediglich die Enden der Haltebolzen von Halteaugen gehalten werden, nicht aber die Haltebolzen über ihre gesamte Länge.

Die Zwischenelemente bzw. Haltebolzen können aus einem Leichtmetall hergestellt sein, wodurch sich das Gewicht und das Trägheitsmoment des Speichenrades verringert.

Nach einer Weiterbildung der Erfindung sind die in den Speichenhaltern vorgesehenen Ausnehmungen und die darin eingesetzten Zwischenelemente bzw. Haltebolzen kreiszylindrisch ausgebildet. Dies hat den Vorteil, dass die Zwischenelemente bzw. Haltebolzen zum Ausgleich von Fertigungstoleranzen zumindest geringfügig um ihre jeweilige Zylinderachse relativ zu der zugeordneten Ausnehmung des Speichenhalters schwenkbar sind. Dadurch werden Zwangsbiegemomente um die Zylinderachse der Zwischenelemente von vornherein ausgeschlossen.

Die Zwischenelemente bzw. Haltebolzen können mit einer zur Form der an den äußeren Speichenenden vorgesehenen Verdickungen komplementären "Sitzmulde" versehen sein. Nach dem "Hindurchfädeln" einer Speiche durch die in dem Zwischenelement bzw. Haltebolzen vorgesehene Ausnehmung liegt die am äußeren Speichenende vorgesehene Verdickung auf der Sitzmulde auf (vergleichbar mit einem Kugelgleitlager). Die am äußeren Speichenende vorgesehene Verdickung kann z. B. kugelförmig bzw. kugelkarlottenförmig, tonnenartig bzw. kreiszylindrisch, elliptisch, linsenkopfartig o. ä. ausgebildet sein.

Vorzugsweise sind die Sitzmulde, die am äußeren Speichenende vorgesehene Verdickung und die in dem zugeordneten Zwischenelement vorgesehene Ausnehmung bzw. Schlitzung so aufeinander abgestimmt, dass die Speiche zum Ausgleich von Fertigungstoleranzen zumindest geringfügig schwenkbar ist. Vorzugsweise ist nicht nur der oben bereits erwähnte Schwenkfreiheitsgrad um die Zylinderachse des Zwischenelements bzw. Haltebolzen vorgesehen, sondern mindestens ein weiterer Schwenkfreiheitsgrad um eine Achse, die quer zur Zylinderachse des Zwischenelements ist.

Zusammenfassend werden mit der Erfindung insbesondere folgende Vorteile erreicht:
- Ein Speichenrad gemäß der Erfindung weist eine hohe Quersteifigkeit bei geringem Gewicht auf.
- Es können gerade Speichen verwendet werden.
- Eine maschinelle Montage, insbesondere ein maschinelles Anziehen der an der Nabe vorgesehenen Speichennippel ist möglich.
- Da die Zwischenelemente auf ihrer gesamten Länge in den Ausnehmungen der Speichenhalter aufliegen, ergeben sich vergleichsweise geringe Flächenpressungen.
- Aufgrund der aufeinander geometrisch abgestimmten Form der Verdickung und der Sitzmulde ergibt sich auch zwischen der Verdickung und der Sitzmulde des Zwischenelements eine vergleichsweise geringe Flächenpressung, was das Speichenrad besonders geländetauglich macht (da im Gelände sehr hohe Spannungsspitzen in den Speichen auftreten können).

Im Folgenden wird die Erfindung im Zusammenhang mit der Zeichnung näher erläutert. Es zeigen:
- Figur 1: ein Speichenrad gemäß der Erfindung in Seitenansicht;
- Figur 2: das Speichenrad der Figur 1 in perspektivischer Darstellung;
- Figur 3: einen Speichenhalter und eine Speiche gemäß der Erfindung in vergrößerter Darstellung;
- Figuren 4a, 4b: ein Ausführungsbeispiel einer Speiche mit kugelförmigem äußeren Speichenende;
- Figuren 5a, 5b: ein Ausführungsbeispiel einer Speiche mit tonnenförmigem äußeren Speichenende;
- Figur 6: ein Ausführungsbeispiel, bei dem ein äußeres Speichenende unmittelbar in eine Ausnehmung eines Speichenhalters eingesetzt ist;
- Figuren 7a, 7b: ein Ausführungsbeispiel einer Speiche mit kugelkarlottenförmigem bzw. linsenkopfartigem Speichenende, das in ein Zwischenelement eingeschoben ist;
- Figuren 8a, 8b: ein Ausführungsbeispiel, bei dem das äußere Speichenende tonnenförmig bzw. kreiszylindrisch (vgl. Figur 5a, 5b) ausgebildet ist.

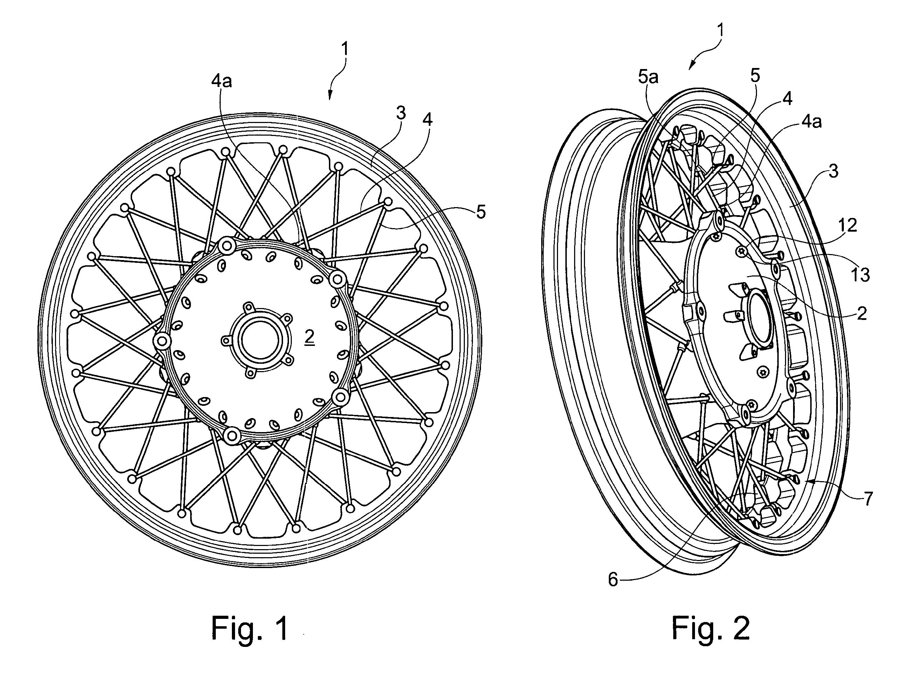

Die Figuren 1, 2 zeigen ein schlauchloses Speichenrad 1 für schlauchlose Reifen. Das Speichenrad 1 weist eine Nabe 2 und eine Felge 3 auf. Die Nabe 2 ist über eine Vielzahl von Speichen 4, 5, mit der Felge 3 verbunden.

Bei den Speichen 4, 5 können erste Speichen 4 und zweite Speichen 5 (vgl. Figur 2) unterschieden werden. Unter ersten Speichen 4 werden Speichen verstanden, deren innere Enden 4a in einem Bereich links einer Radmittelebene mit der Nabe 2 verbunden sind. Unter zweiten Speichen 5 werden Speichen verstanden, deren innere Enden 5a in einem Bereich rechts der Radmittelebene mit der Nabe 2 verbunden sind.

An einer Felgeninnenseite sind in Umfangsrichtung der Felge 3 verteilt nach innen abstehende linke bzw. rechte Speichenhalter 6 bzw. 7 angeordnet. Wie aus Figur 2 ersichtlich ist, sind die Speichenhalter 6, 7 in Umfangsrichtung der Felge 3 jeweils paarweise angeordnet. "Paarweise" angeordnet bedeutet in diesem Zusammenhang, dass an einer Umfangsposition, an der sich Speichenhalter, z. B. die Speichenhalter 6 und 7 befinden, rechts der Radmittelebene ein einer ersten Speiche zugeordneter Speichenhalter und an der selben Umfangsposition, jedoch links der Radmittelebene, ein einer zweiten Speiche zugeordneter Speichenhalter angeordnet ist.

Die Speichenhalter stehen, wie z. B. aus Figur 1 oder 2 ersichtlich ist, etwas radial nach innen von der Felgeninnenseite ab. Sie weisen jeweils eine Ausnehmung 8 auf, die hier im Wesentlichen zylindrisch ist.

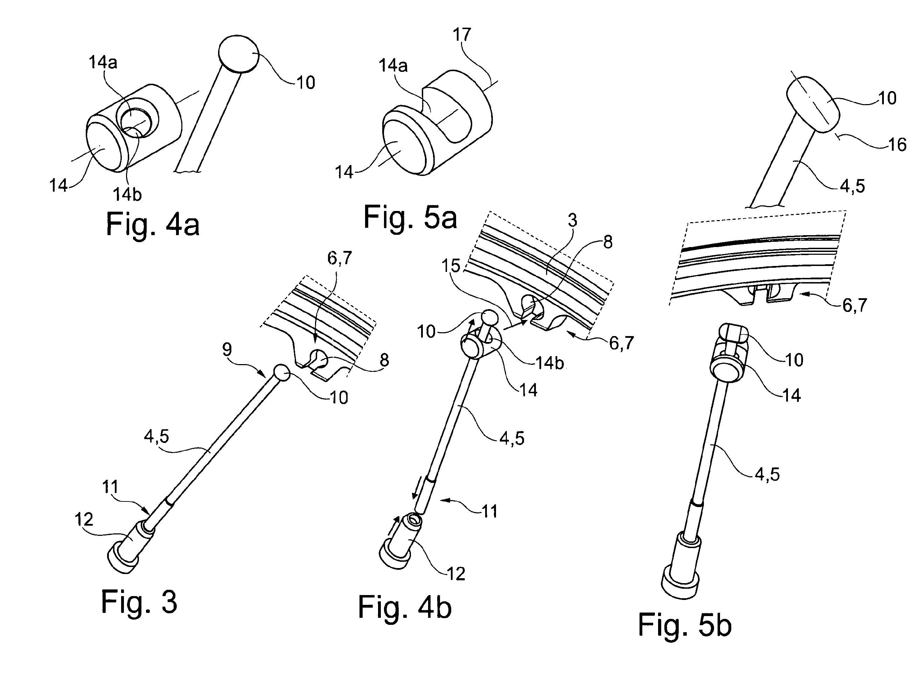

Wie z. B. aus den Figuren 3 bis 5 ersichtlich ist, ist die Ausnehmung 8 geschlitzt. "Geschlitzt" bedeutet, dass sie nach innen, d. h. in Richtung zur Nabe 2 hin und zu mindestens einer Seite des Speichenhalters 6, 7 hin offen ist, so dass bei der Speichenmontage ein Endabschnitt 9 einer Speiche 4, 5 von der offenen Seite des Schlitzes her in die Ausnehmung 8 des Speichenhalters 6, 7 einführbar ist.

Wie aus Figur 3 ersichtlich ist, weist die Speiche 4, 5 an ihrem äußeren Ende 9 eine Verdickung 10 auf. Beim Ausführungsbeispiel der Figur 3 ist die Verdickung 10 so gestaltet, dass sie unmittelbar in die Ausnehmung 8 eingeführt bzw. in der Ausnehmung 8 eingehängt werden kann.

Das radial innere Ende 11 der Speiche 4, 5 ist in einen Speichennippel 12 eingeschraubt. Der Speichennippel 12 wiederrum ist in eine zugeordnete, in der Nabe 2 vorgesehene Ausnehmung bzw. ein Durchgangsloch eingesetzt.

Der Speichennippel 12 weist einen Innenmehrkant 13 auf, mittels dessen der Speichennippel und somit die Speiche bei der Montage angezogen werden kann.

Alternativ zu dem in Figur 3 gezeigten Ausführungsbeispiel, bei dem das äußere Speichenende 9 mit der Verdickung 10 unmittelbar in den Speichenhalter 6, 7 eingehängt wird, kann auch mit einem Zwischenelement 14 gearbeitet werden, was z. B. in den Figuren 4, 5 dargestellt ist.

Das Zwischenelement 14 weist eine im Wesentlichen kreiszylindrische Form mit einer "Sitzmulde 14a" und einer das Zwischenelement durchsetzenden Ausnehmung 14b auf. Bei der Speichenmontage wird zunächst das Zwischenelement 14 vom unteren Speichenende 11 her auf die Speiche 4, 5 "aufgefädelt" und nach oben geschoben, bis die Verdickung 10 auf der Sitzmulde 14a des Zwischenelements 14 aufsitzt.

Anschließend wird das Zwischenelement 14 und die durch die Ausnehmung 14b hindurch gesteckte Speiche 4, 5 von einer Seite der Felge 3 her in die Ausnehmung 8 des Speichenhalters 6, 7 eingeführt, was in Figur 4b durch einen Pfeil 15 angedeutet ist.

Bei dem in den Figuren 4a, 4b gezeigten Ausführungsbeispiel weist die Verdickung 10 eine kugelförmige oder kugelkarlottenförmige Form auf. Die Sitzmulde 14a ist hierzu komplementär gestaltet.

Wie aus den Figuren 4 und 5 ersichtlich ist, kann das Zwischenelement 14 zumindest in gewissem Umfang um eine Längsachse des Zwischenelements 14 relativ zu dem Speichenhalter 6, 7 verschwenkt werden, wodurch Biegemomente um die Längsachse des Zwischenelements 14 von vorne herein ausgeschlossen werden. Aufgrund der kugelförmigen bzw. kugelkarlottenförmigen Gestalt der Verdickung 10 und der hierzu komplementär geformten Sitzmulde 14a kann die Speiche 4, 5 zusätzlich in Richtungen quer zu der Längsrichtung des Zwischenelements 14 in gewissem Umfang verschwenkt werden, so dass auch Biegemomente um solche Achsen vermieden werden.

Beim Ausführungsbeispiel der Figuren 5a, 5b ist die Verdickung hammer- oder tonnenförmig gestaltet. Wie aus Figur 5a ersichtlich ist, ist eine Längsachse 16 dieser Verdickung 10 im Wesentlichen quer zur Längsachse 17 des Zwischenelements 14. Aufgrund des Schwenkfreiheitsgrades des Zwischenelements 14 um dessen Längsachse 17 relativ zu dem Speichenhalter 6, 7 und dem zusätzlichen Schwenkfreiheitsgrad der Speiche 4, 5 um die Längsachse 16 relativ zu dem Zwischenelement 14 werden Zwangsmomente jeglicher Art, die bei der Montage der Speiche 4, 5 entstehen könnten, vermieden.

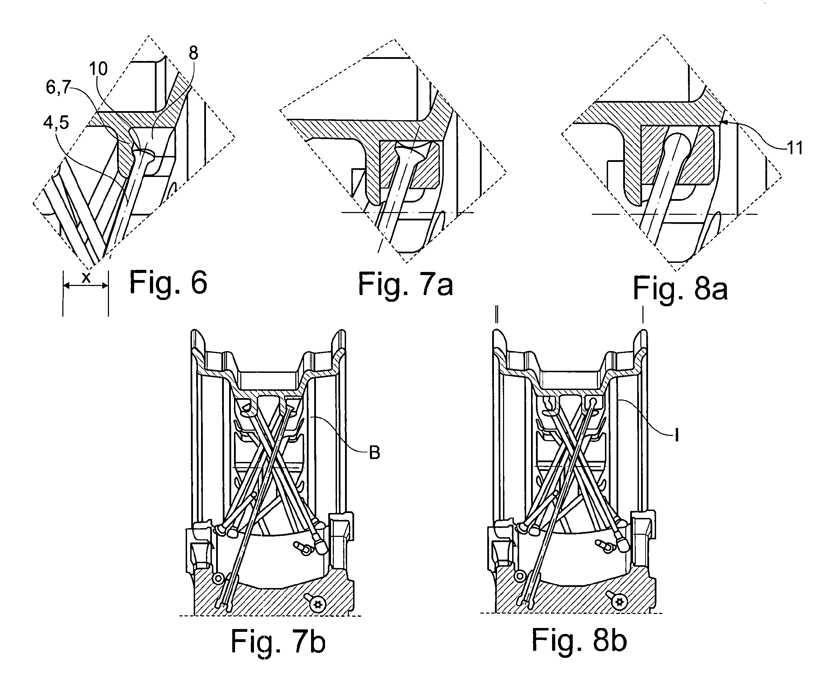

Figur 6 zeigt die in Figur 3 gezeigte Speiche 4, 5 in eingebautem Zustand. Es ist ersichtlich, dass die Verdickung 10 unmittelbar in die Ausnehmung 8 des Speichenhalters 6, 7 eingesetzt ist (d. h. ohne Zwischenelement).

Die Figuren 7a, 7b zeigen die Einbausituation bei dem Ausführungsbeispiel der Figuren 4a, 4b.

Die Figuren 8a, 8b zeigen die Einbausituation des in den Figuren 5a, 5b gezeigten Ausführungsbeispiels.

## Patentansprüche

1. Speichenrad (1) für schlauchlose Reifen, mit
- einer Nabe (2),
- einer Felge (3), wobei an einer Felgeninnenseite in Umfangsrichtung verteilt Speichenhalter (6, 7) vorgesehen sind, die jeweils eine Ausnehmung (8) aufweisen, wobei die Ausnehmungen (8) jeweils einen nach innen zur Nabe (2) und zu einer Seite des Speichenhalters (6, 7) hin offenen Schlitz aufweisen, so dass bei der Speichenmontage ein Endabschnitt (9) einer Speiche (4, 5) von der offenen Seite des Schlitzes her in die Ausnehmung (8) des Speichenhalters (6, 7) einführbar ist, und
- mehreren Speichen (4, 5), welche sich zwischen der Nabe (2) und den Speichenhaltern (6, 7) erstrecken, wobei
- innere Enden (11) erster Speichen (4) in einem Bereich links einer Nabenmittelebene mit der Nabe (2) verbunden sind, und
- innere Enden (11) zweiter Speichen (5) in einem Bereich rechts neben der Nabenmittelebene mit der Nabe (2) verbunden sind,
**dadurch gekennzeichnet, dass**
• die Speichenhalter (6, 7) nach innen zur Nabe (2) von der Felge (3) abstehen und
• die ersten Speichen (4) von Speichenhaltern (6), die sich in einem Bereich rechts der Radmittelebene befinden, gehalten werden, und die zweiten Speichen (5) von Speichenhaltern (7), die sich in einem Bereich links der Nabenmittelebene befinden, gehalten werden und
• die Speichenhalter (6, 7) paarweise entlang des Umfangs der Felge (3) angeordnet sind, derart, dass an einer Umfangsposition, an der sich Speichenhalter (6, 7) befinden, rechts der Radmittelebene ein einer ersten Speiche (4) zugeordneter Speichenhalter (6) angeordnet ist und an derselben Umfangsposition, jedoch links der Nabenmittelebene ein einer zweiten Speiche (5) zugeordneter Speichenhalter (7) angeordnet ist.

2. Speichenrad nach Anspruch 1, **dadurch gekennzeichnet, dass** die Speichen (4, 5) über ihre gesamte Länge gerade sind.

3. Speichenrad nach einem der Ansprüche 1 oder 2, **dadurch gekennzeichnet, dass** die inneren Enden (11) der Speichen (4, 5) jeweils in einen Speichennippel (12) eingeschraubt sind, wobei die Speichennippel in zugeordnete Durchgangsnippellöcher der Nabe (2) formschlüssig eingesetzt sind.

4. Speichenrad nach Anspruch 3, **dadurch gekennzeichnet, dass** die Speichennippel (12) jeweils einen Innenmehrkant (13) aufweisen, der von schräg seitlich der Nabe (2) aus zugänglich ist.

5. Speichenrad nach einem der vorangehenden Ansprüche, **dadurch gekennzeichnet, dass** äußere Ende der Speichen (4, 5) jeweils eine Verdickung (10) aufweist, die formschlüssig in die Ausnehmung (8) des Speichenhalters (6, 7) eingreift.

6. Speichenrad nach einem der vorangehenden Ansprüche, **dadurch gekennzeichnet, dass** äußere Enden (9) der Speichen (4, 5) jeweils mit einem formschlüssig in die Ausnehmung (8) eines zugeordneten Speichenhalters (6, 7) eingesetzten Zwischenelement (14) verbunden sind, wobei die Zwischenelemente (14) jeweils eine Ausnehmung (14b) zur Aufnahme eines äußeren Endabschnitts (9) einer Speiche (4, 5) aufweisen.

7. Speichenrad nach Anspruch 6, **dadurch gekennzeichnet, dass** die Zwischenelemente (14) entlang ihrer gesamten Länge von den Speichenhaltern (6, 7) gehalten werden.

8. Speichenrad nach einem der Ansprüche 6 oder 7, **dadurch gekennzeichnet, dass** es sich bei der Ausnehmung (14b) eines jeden Zwischenelements (14) um eine das Zwischenelement (14) durchsetzende Ausnehmung (14b) handelt, durch die sich der äußere Endabschnitt (9) der zugeordneten Speiche (4, 5) hindurch erstreckt, wobei am äußeren Ende (9) der zugeordneten Speiche (4, 5) eine Verdickung (10) vorgesehen ist, welche formschlüssig von einer radialen Außenseite her auf das Zwischenelement (14) aufgesetzt ist.

9. Speichenrad nach einem der vorangehenden Ansprüche, **dadurch gekennzeichnet, dass** die Ausnehmungen (8) und die darin eingesetzten Zwischenelemente (14) kreiszylindrisch gestaltet sind, so dass die Zwischenelemente (14) zum Ausgleich von Fertigungstoleranzen zumindest geringfügig um ihre jeweilige Zylinderachse (17) relativ zu der zugeordneten Ausnehmung (8) schwenkbar sind.

10. Speichenrad nach einem der vorangehenden Ansprüche, **dadurch gekennzeichnet, dass** die Zwischenelemente (14) jeweils eine Sitzmulde (14a) aufweisen, auf der, von einer Außenseite der Felge (3) her betrachtet, die Verdickung (10) aufliegt, wobei die in dem Zwischenelement (14) vorgesehene, von dem äußeren Endabschnitt (9) einer Speiche (4, 5) durchsetzte Ausnehmung (14b) in die Sitzmulde (14a) mündet.

11. Speichenrad nach Anspruch 10, **dadurch gekennzeichnet, dass** die Sitzmulde (14a) die Verdickung (10), die in dem Zwischenelement (14) vorgesehene Ausnehmung (14b) und der in dem Speichenhalter (6, 7) vorgesehene Schlitz so aufeinander abgestimmt sind, dass die Speiche (4, 5) zum Ausgleich von Fertigungstoleranzen zumindest geringfügig um eine Achse (16), die quer zur Zylinderachse (17) des Zwischenelements (14) ist, relativ zu dem Zwischenelement (14) schwenkbar ist.

## Claims

1. A spoked wheel (1) for tubeless tyres, comprising
- a hub (2)
- a rim (3), wherein spoke-holders (6, 7) distributed in the peripheral direction on an inner side of the rim each have a recess (8), wherein the recesses (8) each have a slot open inwardly towards the hub (2) and to one side of the spoke holders (6, 7), so that when the spokes are mounted, an end portion (9) of a spoke (4, 5) is insertable from the open side of the slot into the recess (8) in the spoke holder (6, 7) and
- a number of spokes (4, 5) extending between the hub (2) and the spoke holders (6, 7), wherein
- inner ends (11) of first spokes (4) are connected to the hub (2) in a region at the left of a hub central plane and
- inner ends (11) of second spokes (5) are connected to the hub (2) in a region to the right near the hub central plane
**characterised in that**
• the spoke holders (6, 7) project inwardly from the rim (3) towards the hub (2) and
• the first spokes (4) on spoke holders (6) are held in a region to the right of the wheel central plane and the second spokes (5) are held on spoke holders (7) in a region to the left of the wheel central plane, and
• the spoke holders (6, 7) are so disposed in pairs along the periphery of the rim (3) that a spoke holder (6) associated with a first spoke (4) is disposed in a peripheral position to the right of the wheel central plane where the spoke holders (6, 7) are situated and a spoke holder (7) associated with a second spoke (5) is disposed at the same peripheral position but to the left of the hub central plane.

2. A spoked wheel according to claim 1, **characterised in that** the spokes (4, 5) are straight along their entire length.

3. A spoked wheel according to claim 1 or claim 2, **characterised in that** the inner ends (11) of the spokes (4, 5) are each screwed into a nipple (12), wherein the nipples are positively inserted into associated nipple holes through the hub (2).

4. A spoked wheel according to claim 3, **characterised in that** the nipples (12) each have an inner polygon (13) accessible from a slope at the side of the hub (2).

5. A spoked wheel according to any of the preceding claims, **characterised in that** outer ends of the spokes (4, 5) each have a thick portion (10) which positively engages in the recess (8) in the spoke holder (6, 7).

6. A spoked wheel according to any of the preceding claims, **characterised in that** outer ends (9) of the spokes (4, 5) are each connected to an intermediate element (14) positively inserted into the recess (8) in an associated spoke holder (6, 7), wherein the intermediate elements (14) each have a recess (14b) for receiving an outer end portion (9) of a spoke (4, 5).

7. A spoked wheel according to claim 6, **characterised in that** the intermediate elements (14) are held along their entire length by the spoke holders (6, 7).

8. A spoked wheel according to claim 6 or claim 7, **characterised in that** the recess (14b) in each individual element (14) extends through the intermediate element (14), and the outer end portion (9) of the associated spoke (4, 5) extends through it, wherein a thick portion (10) is provided at the outer end (9) of the associated spoke (4, 5) and is positively mounted on the intermediate element (14) extending from a radial outer side.

9. A spoked wheel according to any of the preceding claims, **characterised in that** the recesses (8) and the intermediate elements (14) inserted therein are circular cylindrical, so that in order to compensate work tolerances, the intermediate elements (14) are at least slightly pivotable around their respective cylinder axis (17) relative to the associated recess (8).

10. A spoked wheel according to any of the preceding claims, **characterised in that** the intermediate elements (14) each have a seat cavity (14a) on which the thick portion (10) rests, considered from an outer side of the rim (3), wherein the recess (14b) provided in the intermediate element (14) and through which the outer end portion (9) of a spoke (4, 5) extends, opens into the seat cavity (14a).

11. A spoked wheel according to claim 10, **characterised in that** the seat cavity (14a), the thick portion (10), the recess (14b) in the intermediate element (14), and the slot in the spoke holder (6, 7) are so adapted to one another that the spoke (4, 5), in order to compensate work tolerances, is pivotable relative to the intermediate element (14) at least slightly around an axis (16) transversely of the cylindrical axis (17) of the intermediate element (14).

## Revendications

1. Roue à rayons (1) recevant un pneumatique sans chambre à air, comportant,
- un moyeu (2),
- une jante (3), dont le côté intérieur comporte des supports de rayons (6, 7) répartis dans la direction périphérique, ayant chacun une ouverture (8), les ouvertures (8) ayant chacune une fente débouchant vers l'intérieur vers le moyeu (2) et vers un côté du support de rayon (6, 7), de façon qu'au montage des rayons, l'extrémité (9) d'un rayon (4, 5) puisse s'introduire à partir du côté ouvert de la fente dans l'ouverture (8) du support de rayon (6, 7), et
- plusieurs rayons (4, 5) entre le moyeu (2) et les supports de rayons (6, 7),
• l'extrémité intérieure (11) des premiers rayons (4) étant reliée au moyeu (2) dans la région gauche du plan médian du moyeu, et
• l'extrémité intérieure (11) des seconds rayons (5) étant reliée au moyeu (2), dans la région droite à côté du plan médian du moyeu,
**caractérisée en ce que**
• les supports de rayons (6, 7) sont en saillie de la jante (3) par rapport au moyeu (2), et
• les premiers rayons (4) sont tenus par des supports de rayons (6) d'une région à droite du plan médian de la roue et les seconds rayons (5) sont tenus par des supports de rayons (7) d'une zone à gauche du plan médian de moyeu,
• les supports de rayons (6, 7) sont répartis par paires dans la direction périphérique de la jante (3) de façon que dans une position périphérique où se trouvent des supports de rayons (6, 7), à droite du plan médian de la roue, il y a un support de rayon (6) associé à un premier rayon (4) et dans la même position périphérique, mais à gauche du plan médian du moyeu, il y a un support de rayon (7) associé à un second rayon (5).

2. Roue à rayon selon la revendication 1,
**caractérisée en ce que**
les rayons (4, 5) sont rectilignes sur toute leur longueur.

3. Roue à rayon selon la revendication 1 ou 2,
**caractérisée en ce que**
l'extrémité intérieure (11) des rayons (4, 5) est visée dans un nipple (12) de rayon, logé par une liaison par la forme dans un orifice traversant, associé, du moyeu (2).

4. Roue à rayon selon la revendication 3,
**caractérisée en ce que**
les nipples de rayon (12) ont chacun un multipan pont intérieur (13), accessible en biais, à côté du moyeu (2).

5. Roue à rayon selon l'une des revendications précédentes,
**caractérisée en ce que**
l'extrémité extérieure des rayons (4, 5) comporte un renforcement (10) qui pénètre par une liaison par la forme dans l'évidement (8) du support de rayon (6, 7).

6. Roue à rayon selon l'une des revendications précédentes,
**caractérisée en ce que**
l'extrémité extérieure (9) des rayons (4, 5) est reliée à un élément intermédiaire (14) respectif, qui se loge par une liaison par la forme dans l'ouverture (8) du support de rayon (6, 7) associé, l'élément intermédiaire (14) ayant un évidement (14b) pour recevoir l'extrémité extérieure (9) du rayon (4, 5).

7. Roue à rayon selon la revendication 6,
**caractérisée en ce que**
l'élément intermédiaire (14) est tenu sur toute sa longueur par les supports de rayons (6, 7).

8. Roue à rayon selon l'une des revendications 6 ou 7,
**caractérisée en ce que**
l'évidement (14b) de chaque élément intermédiaire (14) est un évidement (14b) traversant l'élément intermédiaire (14) et qui est traversé par le segment d'extrémité extérieur (9) du rayon (4, 5) associé, l'extrémité extérieure (9) du rayon (4, 5) associé, ayant un renforcement (10) qui vient par une liaison par la forme à partir du côté extérieur, radial, sur l'élément intermédiaire (14).

9. Roue à rayon selon l'une des revendications précédentes,
**caractérisée en ce que**
les ouvertures (8) et les éléments intermédiaires (14) logés dans celles-ci, ont des formes cylindriques, circulaires de façon que les éléments intermédiaires (14) permettent de compenser les tolérances de fabrication, au moins légèrement en pivotant autour de l'axe respectif (17) de leur cylindre, par rapport à l'évidement associé (8).

10. Roue à rayon selon l'une des revendications précédentes,
**caractérisée en ce que**
chaque élément intermédiaire (14) comporte une auge formant un siège (14a) contre laquelle s'appuie le renforcement (10) à partir du côté extérieur de la jante (3), le segment d'extrémité extérieur (9) prévu dans l'élément intermédiaire (14) ayant une ouverture (14b) traversée par un rayon (4, 5) et dans laquelle débouche l'auge formant le siège (14a).

11. Roue à rayon selon la revendication 10,
**caractérisée en ce que**
l'auge formant le siège (14a), le renforcement (10) qui vient dans l'évidement (14b) de l'élément intermédiaire (14) et la fente du support de rayon (6, 7) sont accordés les uns en fonction des autres pour que les rayons (4, 5), puissent pivoter au moins légèrement autour d'un axe (16) transversal à l'axe (17) du cylindre de l'élément intermédiaire (14) par rapport à cet élément intermédiaire (14) pour compenser les tolérances de fabrication.
